# EUROPÄISCHE PATENTSCHRIFT

(11) **EP 0 621 754 B1**
(45) Veröffentlichungstag und Bekanntmachung des Hinweises auf die Patenterteilung: **09.10.1996**
(21) Anmeldenummer: 92902908.0
(22) Anmeldetag: 24.01.1992
(51) Int. Cl.: A23L 1/32, A23L 1/015

(54) **VERFAHREN ZUR HERSTELLUNG EINES DIÄTETISCHEN, CHOLESTERINREDUZIERTEN VOLLEI- ODER EIGELBPRODUKTES, SOWIE DEREN WEITERVERARBEITUNG ZU NAHRUNGSMITTELN**
METHOD OF PREPARING A DIETARY LOW CHOLESTEROL WHOLE EGG OR EGG YOLK PRODUCT, AND THE FURTHER PROCESSING OF THE PRODUCT TO GIVE FOODS
PROCEDE POUR LA FABRICATION D'UN PRODUIT D'OEUF ENTIER OU DE JAUNE D'OEUF DIETETIQUE A FAIBLE TENEUR EN CHOLESTEROL, AINSI QUE SA TRANSFORMATION EN ALIMENTS

(43) Veröffentlichungstag der Anmeldung: 02.11.1994
(73) Patentinhaber: JACKESCHKY, Martin, D-24105 Kiel (DE)
(72) Erfinder: JACKESCHKY, Martin, D-24105 Kiel (DE)
(74) Vertreter: Emmel, Thomas, Dipl.-Biol., Dr.
(86) Internationale Anmeldenummer: EP9200159
(87) Internationale Veröffentlichungsnummer: WO9314649

(56) Entgegenhaltungen:
- EP-A- 0 048 818
- US-A- 3 717 474
- WPIL/Derwent, AN=88-171762 [25], Derwent Publications Ltd, (London, GB), & JP-A-63109757 (NISSIN SHIKUHIN KAISHA) 14. Mai 1988, siehe Zusammenfassung
- WPIL/Derwent, AN=84-234484 [38], Derwent Publications Ltd, (London, GB), & JP,A,59140299 (Q.P. CORP.) 11. August 1984, siehe Zusammenfassung
- JAPS/JPO, Band 8, Nr. 255 (C-253), 21. November 1984, & JP,A,59135847 (KEWPIE K.K.) 4. August 1984, siehe Zusammenfassung

## Beschreibung

Die Erfindung bezieht sich auf ein Verfahren zur Herstellung eines diätetischen, cholesterolreduzierten Vollei- oder Eigelbproduktes, die Produkte selbst sowie ihre Verwendung als Ausgangsprodukte bei der Herstellung von Nahrungsmitteln. Weiterhin bezieht sich die Erfindung auf einen während des Verfahrens als Nebenprodukt anfallenden Eiextrakt sowie dessen Verwendung als Nahrungsmittelzusatz.

Die verwendeten Begriffe Vollei bzw. Eigelb beziehen sich vorrangig auf Hühnereier. Hühnereier enthalten neben ernährungsphysiologisch wertvollen Bestandteilen, wie z.B. Proteinen (z.B. Vitellin), Phosphorlipiden (Lecithine), auch aus medizinischer Sicht nicht erwünschte Stoffe, wie z.B. das Cholesterol. Cholesterol ist in der Fettfraktion des Eigelbs enthalten und macht zusammen mit den ebenfalls nicht gewünschten gesättigten Fettsäuren ca. 20 % der verwertbaren Masse des Eigelbs aus.

Im Hinblick auf den Einsatz von Eiern in diätetischen Lebensmitteln ist es wünschenswert, insbesondere den Cholesterolanteil in dem Eigelb zu reduzieren.

In diesem Zusammenhang ist bekannt, die Fettfraktion des Eigelbes im Wege einer Totalextraktion mit Lösungsmitteln, z.B. Hexan, zu entfernen. Dieses Verfahren erlaubt zwar eine Entfernung des Cholesterols; es werden aber weiterhin auch die medizinisch erwünschten Lecithine, zumindest teilweise, mitextrahiert. Weiterhin ist es nicht möglich, das Extraktionsmittel, z.B. Hexan, wieder vollständig aus der Eimasse zu entfernen, ohne dar eine Schädigung des Produktes eintritt.

Eine weitere Möglichkeit, Cholesterol aus dem Eigelb zu entfernen, besteht darin, eine Hochdruckextraktion mittels überkritischer Fluide, (z.B. CO₂) durchzuführen. Im Wege der Hochdruckextraktion lassen sich das Cholesterol zusammen mit den anderen im Eigelb enthaltenen Fettstoffen selektiv entfernen, ohne daß der Lecithingehalt reduziert wird. Das Verfahren hat jedoch den Nachteil, daß Cholesterol hauptsächlich als letzte Substanz der Eigelb-Fettfraktion von dem Fluidstrom aufgenommen wird, wodurch längere Behandlungszeiten erforderlich sind. Bei den während der Hochdruckextraktion herrschenden Temperatur- und Druckbedingungen kann daher leicht eine Teildenaturierung des Eigelbproteins auftreten.

Eine weitere Möglichkeit, Cholesterol aus dem Eigelb zu entfernen, besteht darin, dem flüssigen Eigelb Cyclodextrin zuizusetzen. Cyclodextrin besitzt die Eigenschaft, selektiv Cholesterol einzuschließen. Nach einer bestimmten Einwirkzeit kann das Cyclodextrin mit dem Einschluß, also mit dem Cholesterol, wieder aus dem Eigelb entfernt werden. Dieses Verfahren hat zurzeit aus wirtschaftlichen Gründen noch keine Marktreife.

Der Erfindung liegt daher die Aufgabe zugrunde, ein wirtschaftliches, aus gesundheitlicher Sicht unbedenkliches Verfahren zur Herstellung cholesterolreduzierter Vollei- bzw. Eigelbprodukte zu schaffen. Ein weiteres Ziel der Erfindung ist, besonders geeignete cholesterolreduzierte Vollei- bzw. Eigelbprodukte bereitzustellen. Ein weiteres Ziel der Erfindung ist, besonders geeignete cholesterolreduzierte Vollei- bzw. Eigelbprodukte bereitzustellen.

Gelöst wird die Aufgabe durch ein Verfahren mit den kennzeichnenden Merkmalen des Anspruches 1 sowie durch ein Produkt gemäß Anspruch 13. Als Nebenprodukt des erfindungsgemäßen Verfahrens fällt weiterhin ein Erzeugnis gemäß des Anspruches 18 an.

Das erfindungsgemäße Verfahren besteht im wesentlichen darin, daß man das Ausgangsprodukt Vollei oder Eigelb entwässert und dann mit einem Extraktionsmittel auf Basis eines cholesterolarmen flüssigen Speiseöles behandelt. Das Prinzip des Verfahrens ist, daß sich in dem entstehenden Gemisch aus der Fettfraktion des Eigelbes und dem zugesetzten flüssigen Speiseöl eine im wesentlichen einheitliche Konzentration aller Fettkomponenten einstellt. Mit anderen Worten, das Cholesterol aus der Fettfraktion des Eigelbs wird sich gleichmäßig in das cholesterolarme Extraktionsmittel verteilen. Nach Abtrennung des Extraktionsmittels kann man daher bereits in einem einzigen Extraktionsschritt einen wesentlichen Anteil des Eigelbcholesterols entfernen.

Wiederholt man den Extraktionsvorgang, wie in Anspruch 2 vorgeschlagen, mehrere Male, so läßt sich der Cholesterolanteil im Eigelb ohne weiteres um 95 % und mehr reduzieren.

Je nachdem, welchen Fettgehalt das endgültige Produkt haben soll, ist es möglich, den letzten Entölungssschritt gemäß Anspruch 3 so durchzuführen, daß das Extraktionsmittel nur zum Teil entfernt wird.

Es sind nun unterschiedliche Speiseöle als Extraktionsmittel denkbar. Ist man z.B. an einem Produkt interessiert, dessen Eigelbzusammensetzung im wesentlichen der des natürlichen Eigelbes, jedoch ohne Cholesterol, entspricht, so ist es nach Anspruch 4 möglich, zur Extraktion cholesterolarmes Eiöl einzusetzen. Derartiges Eiöl läßt sich z.B. dadurch erhalten, daß man Eigelb zunächst mit einem beliebigen Speiseöl extrahiert und dann aus dem Extrakt das Cholesterol entfernt. Im Gegensatz zu den Bedingungen im Eigelb läßt sich Cholesterol aus einer Fettflüssigkeit ohne größere Probleme auf herkömmliche Weise entfernen. Der entcholesterinisierte Extrakt des ersten Behandlungsschrittes kann dann erneut als Extraktionsmittel verwendet werden und reichert sich mit Eiöl an. Wiederholt man diese Behandlung mehrere Male, so erhält man ein mit Eigelbfetten in zunehmendem Maße angereichertes Extraktionsmittel, das im wesentlichen die Zusammensetzung von Eiöl, jedoch ohne Cholesterol aufweist. Wird ein derartig angereichertes Eiöl als Extraktionsmittel benutzt, so erhält man ein cholesterolfreies Eiprodukt, das ansonsten der natürlichen Eizusammensetzung entspricht. Dieses Verfahren ist jedoch relativ aufwendig.

Üblicherweise wird es daher vorzuziehen sein, als Extraktionsmittel gemäß Anspruch 5 ein übliches pflanzliches Speiseöl einzusetzen. Geeignet sind alle pflanzlichen Speiseöle, wie z.B. Weizenkeimöl, Sonnenblumenöl, Sojaöl, Palmöl oder Distelöl. Man kann diese Öle einzeln oder aber auch in Gemischen zusetzen. Einmal abgesehen von der Wirtschaftlichkeit, hat man mit einem derartigen Extraktionsmittel weiterhin den Vorteil, daß neben dem Cholesterol auch die ebenfalls nicht gewünschten tierischen gesättigten Fettsäuren entfernt bzw. reduziert werden und gegebenenfalls eine Anreicherung mit ungesättigten, pflanzlichen Fettsäuren und öllöslichen Vitaminen möglich ist.

Vorteilhafterweise wird gemäß Anspruch 6 der Entölungsschritt, also die Entfernung des überschüssigen Extraktionsmittels, durch bekannte, gängige Verfahren, wie z.B.

Dekantieren, Separieren, Filtrieren, insbesondere im Wege der Zentrifugation durchgeführt.

Ansprüche 7 und 8 sehen nun in vorteilhafter Weise vor, daß das Vollei bzw. Eigelb vor Behandlung mit dem Extraktionsmittel sprühgetrocknet und durch Instantisierung auf eine Korngröße von 150 µm - 300 µm gebracht wird. Im Wege der Sprühtrocknung wird dem Ausgangsprodukt Eigelb oder Vollei auf besonders schonende Weise das Wasser entzogen, das durch die Instantisierung gekörnte Pulver läßt sich weiterhin nach der Extraktionsmittelbehandlung besonders leicht und gleichmäßig entölen.

Mittels der vorstehend beschriebenen Entölungsverfahren läßt sich jedoch das Extraktionsmittel nicht vollständig aus der behandelten Eimasse entfernen. In den überwiegenden Fällen wird man zwar vorrangig daran interessiert sein, ein cholesterolfreies Produkt zu erhalten; die vollständige Entfernung jeglichen Fettes ist nicht unbedingt erforderlich. Es kann im Gegenteil sogar vorteilhaft sein, wenn das cholesterolfreie Produkt zusätzlich z.B. hochwertige, aus Pflanzenölen stammende Fettsäuren aufweist.

Nichtsdestotrotz kann es erforderlich sein, z.B. in Verbindung mit Sportlernahrung ein vollkommen fettfreies Eigelb bzw. Volleiprodukt zur Verfügung zu stellen. In einem derartigen Fall sieht die Erfindung gemäß Anspruch 9 vor, daß die nach dem letzten Entölungsschritt erhaltene, praktisch cholesterolfreie Eimasse zusätzlich mit überkritischen Fluiden extrahiert wird. Allerdings ist es weiterhin sinnvoll gemäß Anspruch 10 die erhaltene Eimasse vor der Fluidextraktion auf eine Korngröße von 0,5-2 mm zu bringen. Eine derartige granulierte Eimasse kann besonders gleichmäßig von dem Fluidstrom durchströmt werden. Die beschriebene Hochdruckextraktion kann allerdings sinnvoll nur eingesetzt werden, wenn als Extraktionsmittel pflanzliche Speiseöle verwendet wurden und mehrfach extrahiert wurde.

Pflanzliche Fette gehen im Gegensatz zu tierischen Fetten relativ leicht in den Fluidstrom über und können in kurzen Behandlungszeiträumen extrahiert werden. Die eingangs beschriebenen Nachteile bei der Behandlung von natürlichem Eigelb mit überkritischen Fluiden treten also hier nicht auf; man erhält daher auf schonende Weise ein vollkommen fettfreies Produkt. In diesem Zusammenhang hat es sich weiterhin als vorteilhaft erwiesen, wenn gemäß Anspruch 11 der Ausgangssubstanz vor der Sprühtrocknung 0,1 bis 2 % eines Elektrolytes, z.B. Kochsalz und/oder Natriumcitrat, zugesetzt werden. Die Gegenwart derartiger Salze in der Eimasse schützt zusätzlich vor einer möglichen Denaturierung von Proteinen.

Alternativ zu der eben beschriebenen Fluidextraktion oder als Vorstufe dazu ist es gemäß Anspruch 12 jedoch auch möglich, mindestens während der letzten Entölung, also der Entfernung des überschüssigen Extraktionsmittels, ein Inertgas gegebenenfalls mit Überdruck durch die Eimasse zu pressen und auf diese Weise nicht fest absorbiertes Öl zu entfernen, wobei generell eine Durchführung des gesamten erfinderischen Verfahrens unter Schutzgas von Vorteil ist.

Wie eingangs schon erwähnt, sind die medizinisch nicht erwünschten Stoffe, insbesondere das Cholesterol, nahezu ausschließlich im Eigelb enthalten. Das reine Hühnereiweiß ist im wesentlichen ein Gemisch aus Albumin und Globulin und als solches diätetisch unbedenklich. Aus diesem Grund wird es in den meisten Fällen nicht erforderlich sein, als Ausgangsprodukt des erfinderischen Verfahrens Vollei einzusetzen; es genügt ausschließlich, das Eigelb zu behandeln. Die Behandlung nur des Eigelbs hat den Vorteil, daß man zielgerichteter extrahieren kann. Außerdme verringern sich die zu bearbeitenden Mengen. In der Regel kann man also davon ausgehen, daß in dem erfinderischen Verfahren Eigelb aufgearbeitet wird.

Anspruch 13 betrifft nun solche Fälle, in denen man als Ausgangssubstanz Eigelb einsetzt, als diätetisches Endprodukt jedoch im wesentlichen eine Volleizusammensetzung anstrebt. Für diesen Fall schlägt Anspruch 13 vor, die nach der Behandlung erhaltene Eigelbmasse mit sprühgetrocknetem Eiweiß in einer Menge zu versetzen, die der natürlichen Volleizusammensetzung entspricht.

Die Erfindung betrifft weiterhin ein diätetisches Eigelb- bzw. Volleiprodukt, das sich gemäß des Verfahrens der Ansprüche 5 bis 13 mittels Extraktion durch pflanzliche Speiseöle herstellen läßt. In der Regel enthalten die unter Anspruch 14 fallenden cholesterinreduzierten Produkte noch einen gewissen Anteil an Extraktionsmittel; mit anderen Worten die ursprüngliche in dem Eigelb enthaltene Fettfraktion ist ganz oder teilweise durch pflanzliches Speiseöl substituiert. Derartige Produkte sind also nicht nur cholesterolarm, sie sind zusätzlich auch noch mit essentiellen pflanzlichen Fettsäuren angereichert, was sie aus diätetischer Sicht besonders wertvoll macht.

Die erfindungsgemäßen Eiprodukte können durch Extraktion mittels beliebig pflanzlicher Speiseöle hergestellt werden. Dementsprechend sind auch eine beliebige Anzahl unterschiedlicher Produkte auf Basis der unterschiedlichen Speiseöle denkbar. Bevorzugt ist in diesem Zusammenhang jedoch, daß das Produkt "rotes Palmöl" zumindest im Gemisch mit einem anderen pflanzlichen Speiseöl enthält. "Rotes Palmöl" ist ein ausgezeichnetes Antioxidationsmittel und gewährleistet, daß die erfindungsgemäßen Eiprodukte lagerstabil sind und nicht vorzeitig ranzig werden.

Ein weiteres vorteilhaftes Eiprodukt ist in Anspruch 16 offenbart. Dieses Produkt besitzt im wesentlichen denselben mengenmäßigen Fettanteil wie unbehandeltes Vollei oder Eigelb, nur mit dem Unterschied, daß die Fettfraktion des Eiproduktes durch pflanzliches Speiseöl gebildet ist. Ein derartiges Produkt läßt sich z.B. genauso wie Eigelb in bezug auf in Rezepturen angegebene Mengen einsetzen und verarbeiten.

Die nach dem Verfahren erhältlichen Eiprodukte lassen sich ohne weiteres bei der Herstellung von diätetischen Nahrungsmitteln einsetzen. Sie enthalten keinerlei deklarationspflichtige Stoffe. Die Extraktion bzw. Herstellung der Produkte erfolgt ausschließlich mit unbedenklichen Lebensmitteln. Die Erfindung bezieht sich daher weiterhin gemäß Anspruch 17 auf die Verwendung der nach dein erfindungsgemäßen Verfahren herstellbaren Eiprodukte bei der Zubereitung von diätetischen Nahrungsmitteln

Im Verlaufe des erfindungsgemäßen Verfahrens fällt als Nebenprodukt das aus der Eimasse während der Entölung entfernte Extraktionsmittel an. In diesem Extraktionsmittel sind, je nach Verfahrensführung, die natürlichen Fette des Eigelbes sowie gegebenenfalls andere öllösliche Substanzen unterschiedlich stark angereichert. Es zeigte sich zunächst, daß dieser Eiextrakt über ausgezeichnete Eigenschaften als Emulgator verfügt. Weiterhin läßt sich das in dem Extrakt angereicherte Cholesterol ohne weiteres z.B. im Wege einer Einschlußverbindung (adduktive Kristallisation) entfernen. Damit ist eine Anwendung des Eiextraktes als natürlicher Farbgeber (Eigelbfarbe) oder Geschmacksstoff (Aroma) in Lebensmittelzubereitungen möglich, ohne daß eine Zusatzstoffdeklaration erforderlich wäre.

Der Anspruch 18 bezieht sich daher auf eine bevorzugte Verwendung des als Nebenprodukt des erfindungsgemäßen Verfahrens auftretenden Eiextrakt in Nahrungsmitteln.

Die Erfindung soll im folgenden anhand von mehreren Beispielen und einer Abbildung erläutert werden.

### Beispiel 1:

1.000 g sprühgetrocknetes, normales Eigelb-Pulver wurden in 1,5 l Sojaöl von 40°C augeschlämmt und nach ca. 10 min Einwirkzeit in einer Siebzentrifuge (Zentrifugenkennzahl 1.300) entölt und viermal mit je 0,5 l Sojaöl von 40°C nachbehandelt. Danach wurde die Eimasse ca. 10 min trockengeschleudert. Die Ausbeute betrug 1.085 g. Der Restcholesterolgehalt betrug 239 mg/100 g Ei-Pulver.

### Beispiel 2:

Die Aufarbeitung erfolgte entsprechend dem Beispiel 1. Jedoch wurde durch Modifikation des Trockenprozesses das sprühgetrocknete Eigelb-Pulver so verändert, daß sein Korn eine höhere Porosität aufwies. Die durchschnittliche Korngröße betrug 225 µ. In diesem Fall betrug die Ausbeute 1.040 g und der Restcholesterolgehalt 223 mg/100 g Eipulver.

### Beispiel 3:

Die Aufarbeitung erfolgte gemäß Beispiel 1; das als Ausgangssubstanz eingesetzte Eigelbpulver wurde entsprechend Beispiels 2 sprühgetrocknet. Abweichend zu der Aufarbeitung gemäß Beispiel 1 wurde jedoch sowohl der Zentrifugenraum als auch die Vorlagebehälter mit einem Inertgas (hier CO₂) gefüllt und bei einem leichten Überdruck gehalten. Das Inertgas wurde im Kreislauf zwischen Zentrifuge und der Vorlage geführt.

Die Ausbeute betrug 976 g und der Restcholesterolgehalt 200 mg/100 g Eipulver.

### Beispiel 4:

Die Aufarbeitung erfolgte entsprechend Beispiel 3. Es wurden hier jedoch zur 4. Öl-Nachbehandlung eine Mischung aus 0,250 l Sojaöl und 0,250 l "rotem Palmöl" genommen. "Rotes Palmöl" ist aufgrund seiner natürlichen Zusammensetzung ein sehr wirksames Antioxidationsmittel. Der außergewöhnliche hohe Gehalt an Provitamin A (Karotin) und der sehr hohe Gehalt an Provitamin E (Tocopherol) sind ein wirksamer Langzeitschutz und verhindern, daß das mit Palmöl behandelte Eiprodukt vorzeitig ranzig wird. Die Ausbeute betrug 977 g mit einem Restcholesterolgehalt von 200 mg/100 g Eipulver.

Eine Analyse des gemäß Beispiel 4 gewonnenen Eigelbpulvers zeigt im Vergleich zu unbehandeltem Eigelbpulver folgende Zusammensetzung:

| Komponente | Dimension | Probe 4 | Rohprodukt |
|---|---|---|---|
| | | Durchschnittswerte | |
| Wasser | g | 3,0 | 3,4 |
| Protein | g | 34,8 | 31,7 |
| Fette | g | 56,0 | 59,3 |
| Kohlenhydrate | g | 2,5 | 2,1 |
| Mineralien | g | 3,7 | 3,5 |
| Vitamin A | mg | 20,5 | 1,79 |
| Vitamin E | mg | 215,0 | 5,60 |
| Palmitinsäure C₁₆:0 | g | 13,10 | 12,80 |
| Stearinsäure C₁₈:0 | g | 2,10 | 4,30 |
| Palmitoleinsäure C₁₆:1 | g | 0,24 | 4,10 |
| Ölsäure C₁₈:1 | g | 16,96 | 26,40 |
| Linolsäure C₁₈:2 | g Vitamin F | 21,41 | 10,80 |
| Linolensäure C₁₈:3 | g Vitamin F | 2,85 | 1,65 |
| Arachidonsäure C₂₀:0 | g | 0,10 | 0,30 |
| Fettsäure C₂₂:0 | g | 0,01 | 0,10 |
| Fettsäure C₂₂:6 | g | 0,01 | 0,10 |
| Lecithin (Ei) | mg | 12400 | 12500 |
| Cholesterol | mg | 200 | 3015 |
| Sitosterol | mg | 138 | 0 |
| Stigmasterol | mg | 52 | 0 |
| Campesterol | mg | 48 | 0 |

Aus dieser Tabelle ergeben sich die Möglichkeiten, die die Erfindung bietet, wenn gezielt unterschiedliche Pflanzenöle (in diesem Fall Sojaöl und Palmöl) zur Extraktion eingesetzt werden:
1. Senkung des Cholesterolgehaltes um über 90 %.
2. Praktisch unveränderter Gehalt an Eilecithin.
3. Steigerung des Provitamin A-Gehaltes um das 10-fache.
4. Steigerung des Provitamin E-Gehaltes um das 40-fache.
5. Steigerung des Provitamin F-Gehaltes um rund 100 %.

### Beispiel 5:

Die Aufarbeitung erfolgte entsprechend Beispiel 3. Es wurde jedoch nicht nur viermal, sondern achtmal mit je 0,5 l Sojaöl nachbehandelt. Der Restcholesterolgehalt im Eigelb-Pulver betrug jetzt nur noch 51 mg/100 g Ei-Pulver bei einem Gesamtsteringehalt von 210 mg/100 g Ei-Pulver. Dies bedeutet eine Auswaschungsrate des Cholesterols um ca. 98 %.

Bezüglich der bislang angeführten Beispiele läßt sich allgemein sagen, daß der Ölgehalt des behandelten Eigelb-Pulvers durch Einsatz einer Zentrifuge mit größerem Wirkungsgrade bzw. durch längeres Nachschleudern erheblich gesenkt werden kann, wodurch sich dann auch der Restcholesterolgehalt noch einmal reduziert. Einen ähnlichen Effekt erzielt man, wenn man das inerte Spülgas gemäß Beispiel 3 mit höherem Druck durch die Eimasse führt.

### Beispiel 6:

Um die Qualität zu testen, wurde gemäß Beispiel 4 hergestelltes Eigelbpulver an Stelle von Frischeigelb in 80 %ige Mayonaise, 50 %ige Salatmayonaise, 25 %ige Salatdressing sowie in eine Ei-Buttercreme eingearbeitet.

Es wurden Standardrezepturen angewandt, wobei jeweils 15 g des in den Rezepturen angegebenen Frischeigelbes gegen 7,65g des erfindungsgemäß hergestellten Eigelb-Pulvers in 7,65 g Wasser gelöst, ausgetauscht wurden. Die Eigelbmenge bei den Mayonaisen/Dressings betrug jeweils 7,5 % vom Ölgehalt, bezogen auf Frischeigelb. Die Umrechnung von Frischeigelb zu sprühgetrocknetem Eigelb-Pulver erfolgte gemäß nachstehender Aufstellung:

### Gewicht eines durchschnittlichen Eies = 50 g

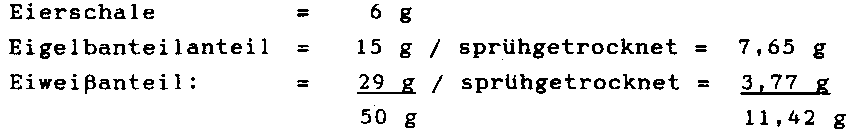

Die nach Standardrezepturen auf Basis des cholesterolarmen Eigelbpulvers hergestellten Produkte wurden von unabhängigen Testpersonen beurteilt. Alle Produkte wurden im Aussehen (gleich optisches Bild) in der Konsistenz (Cremigkeit und Mundgefühl) sowie im Geschmack als gut beurteilt. Es ließ sich kein Beigeschmack bzw. sonstiger signifikanter Unterschied zu Produkten auf Frischeigelbbasis feststellen.

### Beispiel 7:

Weiterhin wurde, entsprechend den von der Natur vorgegebenen Verhältnissen 7,65 g das aus Beispiel 4 gewonnenen Eigelbpulvers 3,77 g sprühgetrocknetem Eiweißpulver vermischt und somit 11,42 g eines Produktes mit der Zusammensetzung von Volleipulver erhalten. Jeweils 11,42 g dieses Produktes in 32,58 ml Wasser gelöst, ließen sich ohne weiteres in diversen Rezepturen an Stelle jeweils eines Eies verarbeiten.

Um beispielhaft die vergleichbare Qualität so hergestellter Volleiprodukte zu demonstrieren, wurden folgende Gerichte küchenmäßig zubereitet und getestet:
a) Rühreier mit Speck
b) Nudeln
c) Eierkuchen
d) Rührkuchen vom Typ Sandtorte
e) Doughnuts.

Für die Produkte c) und d) sowie e) wurde zuerst, entsprechend amerikanischer Industrierezepturen ein sogenannter "Readymix" hergestellt. (Ein "Readymix" ist eine Vormischung, die alle Bestandteile, wie Ei, Gewürze usw. enthält und vor der Zubereitung nur noch mit Wasser oder Milch angerührt werden muß.) Auch hier wurde bei der optischen sowie geschmacklichen Überprüfung kein störender Unterschied zu mit normalen Eiern hergestellten Vergleichsprodukten festgestellt.

Die folgenden Beispiele 8, 9 und 10 beziehen sich auf die Behandlung von natürlichem bzw. gemäß der Erfindung aufgearbeitetem Eigelb mit überkritischen Fluiden. Alle drei Versuche wurden unter den gleichen Bedingungen wie folgt vorgenommen:
1. Das als Ausgangssubstanz verwendete Eigelb wurde auf 2% Restfeuchte mit vorgetrocknetem Inertgas von einer Temperatur von 50 °C getrocknet.
2. Der Extraktionsbehälter (Durchmesser 11,5 cm) wurde ohne Druckaufwendung mit 1.000 g Ei-Produkt gefüllt.
3. Die Extraktion erfolgte mit reinem CO₂ bei einer Temperatur von 40°C, einem Druck von 5.000 psi und einer Durchflußrate von 33 g CO₂/h je g Eigelb.

### Beispiel 8:

Normales, handelsübliches Eigelb-Pulver wurde, wie oben angegeben, auf 2 % Restfeuchte getrocknet und lose in den Extraktor eingefüllt. Die Extraktion erfolgte dann entsprechend Punkt 3 über einen Zeitraum von 4,5 Stunden. Bei Öffnung der Anlage zeigte sich, daß das Gas Kanäle gebildet hatte und die Extraktion daher ungleichmäßig im Extraktionskuchen verlaufen war. Der Gewichtsverlust des Eipulvers betrug 35 %, der Restcholesterolgehalt des extrahierten Eigelbes betrug 1,34 %.

### Beispiel 9:

Eigelb-Pulver wurde entsprechend Beispiel 3 mit Sojaöl gewaschen, dann in einem Wirbelschichtgranulator auf eine Korngröße von 1 - 2 mm granuliert und auf 2 % Restfeuchte getrocknet. Das erhaltene, getrocknete Eigelb wurde in den Extraktor eingefüllt und entsprechend der oben unter Punkt 3 angegebenen Bedingungen über einen Zeitraum von 3,5 Stunden extrahiert. Der Gewichtsverlust des Eigelb-Granulates betrug 37 %, der Restcholesterolgehalt des extrahierten Eigelbes war 0,069 % bei einem Gesamtsteringehalt von 0,11%.

### Beispiel 10:

Die Aufarbeitung erfolgte im wesentlichen entsprechend Beispiel 9 mit dem einzigen Unterschied, daß dem Eigelb-Pulver vor der Sprühtrocknung 1,5 % einer Mischung aus Kochsalz und Kaliumzitrat zugesetzt wurden. Die Extraktion erfolgte ca. 3 Stunden. Der Gewichtsverlust des Eigelbgranulates betrug 43 % bei einer Ölausbeute von 41,1%, sein Cholesterolgehalt war 0,031 % bei einem Steringehalt von 0,07 %.

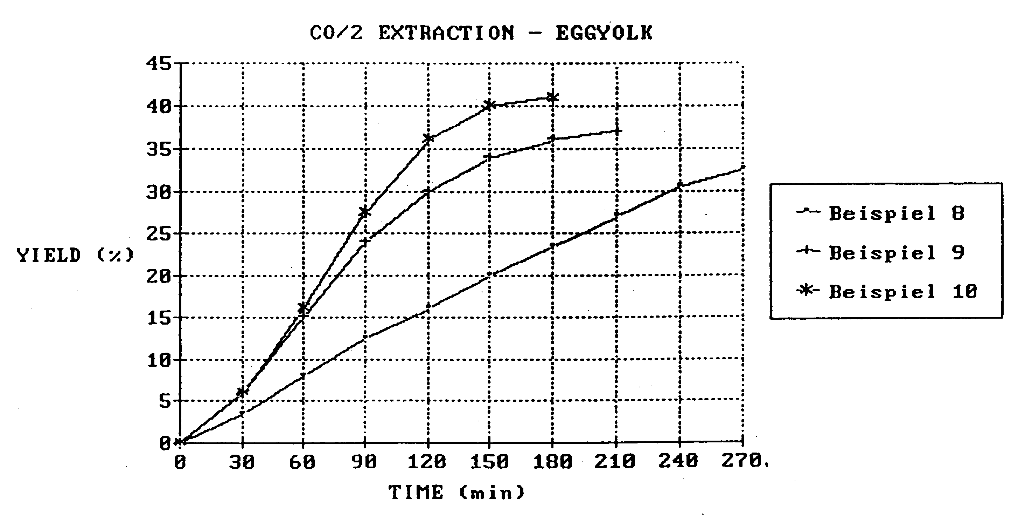

Zum Ablauf der Extraktion der Beispiele 8, 9 und 10 wird auf die Abbildung verwiesen.

Durch Verwendung von Eipulver mit verringerten Ölgehalt (s. Anmerkung zu Beispiel 5) kann die Wirtschaftlichkeit der CO₂-Extraktion, die, wie aus der Abbildung hervorgeht, im Beispiel 8 am schlechtesten und im Beispiel 10 am besten ist, weiter verbessert werden.

In einer weiteren Analyse wurde bezüglich des gemäß der Beispiele 9 und 10 erhaltenen Eigranulates ermittelt, daß diese praktisch fettfrei waren. Beide Granulate waren von leicht cremig-weißer Farbe, neutralem Geruch und wiesen einen leichten Eigelbgeschmack auf. Sie besaßen weiterhin eine gute Löslichkeit, der Lecithingehalt, umgerechnet auf frisches Eigelb, unterschied sich praktisch nicht von dem in unbehandeltem Eigelb. Die Granulate gemäß Beispiel 9 und 10 sind damit gut für eine protein- und lecithinreiche Aufbaunahrung geeignet.

Das abschließende Beispiel 11 bezieht sich auf das in dem Verfahren gemäß der Beispiele 1 bis 4 als Extraktionsmittel eingesetzte Pflanzenöl. Dieses Pflanzenöl wurde nach der Extraktion gesondert aufgefangen und folgendermaßen behandelt:

Das vom Eigelb-Pulver abgetrennte Extraktionsöl des ersten Behandlungsschritts sowie das in der ersten Nachwäsche erhaltene Extraktionsöl wurden vereinigt. Eine Analyse zeigte folgende Zusammensetzung:

| | | |
|---|---|---|
| Gesamtsteringehalt | | 1,442 % |
| davon | Cholesterol | 0,945 % |
| | Stigmasterin | 0,065 % |
| | Campesterin | 0,178 % |
| | Sitosterin | 0,254 % |
| Lecithin | | 0,0099 %. |

Die vereinigten Extraktionsöle wurden bei 20°C drei Tage gelagert, weitere Tage bei 10 bis 12°C.

In dieser Zeit setzten sich wachsartige Bestandteile am Boden ab. Der klare Überstand wurde dekantiert, der trübe Bodensatz bei 10°C abgeschleudert bzw. mit einer Filterpresse abgepreßt.

Aus dem klaren Öl wurde das Cholesterol nach bekanntem Verfahren z.B. über Einschlußverbindungen gewonnen und extrahiert. Nach dieser Behandlung konnte das klar Öl vielseitig eingesetzt werden, z.B. als Emulgator, Geschmacksstoff (Aroma) oder Eigelbfarbe.

## Patentansprüche

1. Verfahren zur Herstellung eines diätetischen, cholesterolreduzierten Voll- oder Eigelbproduktes, **dadurch gekennzeichnet**, daß man Vollei oder Eigelb entwässert, dann mit einem cholesterolarmen Extraktionsmittel auf Basis von flüssigen Speiseölen versetzt, das Extraktionsmittel einwirken läßt und dann in einem Entölungsschritt wieder aus der Eimasse entfernt.

2. Verfahren nach Anspruch 1, **dadurch gekennzeichnet**, daß die Extraktionsmittelbehandlung sowie die sich anschließende Entölung mehrfach, gegebenenfalls auch mit unterschiedlichen Extraktionsmitteln wiederholt wird.

3. Verfahren nach den Ansprüchen 1 und 2, **dadurch gekennzeichnet**, daß der Eimasse im letzten Entölungsschritt das Extraktionsmittel nur teilweise entzogen wird.

4. Verfahren nach den Ansprüchen 1 bis 3, **dadurch gekennzeichnet**, daß als Extraktionsmittel ein Gemisch aus einem beliebigem flüssigen Speiseöl mit einer cholesterolreduzierten Eiölfraktion bzw. cholesterolreduziertes Eiöl alleine dient.

5. Verfahren nach den Ansprüchen 1 bis 3, **dadurch gekennzeichnet**, daß als Extraktionsmittel ein pflanzliches Speiseöl bzw. ein Gemisch mehrerer pflanzlicher Speiseöle eingesetzt wird.

6. Verfahren nach den Ansprüchen 1 bis 5, **dadurch gekennzeichnet**, daß der Entölungsschritt mittels Dekantieren, Separation, Filterpressung, insbesondere im Wege der Zentrifugation, erfolgt.

7. Verfahren nach den Ansprüchen 1 bis 6, **dadurch gekennzeichnet**, daß das Vollei bzw. Eigelb zur Entwässerung einem Sprühtrocknungsprozeß unterworfen wird.

8. Verfahren nach Anspruch 7, **dadurch gekennzeichnet**, daß das Eigelb bzw. Vollei im Rahmen der Sprühtrocknung oder in einem anschließenden Schritt durch Instantisierung auf eine Korngröße voll 150 µm bis 300 µm gebracht wird.

9. Verfahren nach den Ansprüchen 5 bis 8, **dadurch gekennzeichnet**, daß nach dem letzten Entölungsschritt die Eimasse zusätzlich mit überkritischen Fluiden, vorzugsweise CO₂, extrahiert wird.

10. Verfahren nach Anspruch 9, **dadurch gekennzeichnet**, daß die Eimasse nach dem letzten Entölungsschritt und vor der Extraktion mit überkritischen Fluiden im Wege einer Instantgranulierung auf eine Korngröße von 0,5 - 2 mm gebracht wird.

11. Verfahren nach Anspruch 9 und 10, **dadurch gekennzeichnet**, daß dem Vollei bzw. Eigelb vor der Entwässerung ein Elektrolyt, vorzugsweise Kochsalz oder Kaliumcitrat, in Mengen zwischen 0,1 bis 2 %, bezogen auf den Frischeigehalt, zugesetzt wird.

12. Verfahren nach den Ansprüchen 1 bis 11, **dadurch gekennzeichnet**, daß im Zuge der Extraktion oder mindestens während des letzten Entölungsschrittes ein Inertgas mit oder ohne Überdruck durch die Eimasse geleitet wird.

13. Verfahren nach den Ansprüchen 1 bis 12, **dadurch gekennzeichnet**, daß als Ausgangssubstanz Eigelbpulver eingesetzt wird und die nach Behandlung erhaltene Eimasse mit einer der natürlichen Volleizusammensetzung entsprechenden Menge an sprühgetrocknetem Eiweiß versetzt wird.

14. Diätetisches, cholesterinreduziertes Ei- oder Eigelbprodukt, erhältlich nach einem Verfahren, gemäß der Ansprüche 5 bis 13.

15. Produkt nach Anspruch 14, **dadurch gekennzeichnet**, daß die in ihm enthaltene Fettfraktion ein Gemisch von pflanzlichen Speiseölen ist, von denen eines naturbelassenes "rotes Palmöl" ist.

16. Produkt nach Ansprüchen 14 und 15, **dadurch gekennzeichnet**, daß sein Fettgehalt, bezogen auf die Menge, im wesentlichen dem von unbehandeltem Ei oder Eigelb entspricht.

17. Verwendung des nach dem Verfahren gemäß der Ansprüche 1 bis 13 herstellbarem, cholesterolreduzierten Vollei- oder Eigelbproduktes bei der Herstellung von Nahrungsmitteln.

18. Verwendung des in dem Verfahren nach den Ansprüchen 1 bis 13 als Nebenprodukt erhältlichen Vollei- oder Eigelbextraktes als Emulgator, Färber- oder Aromastoff in Nahrungsmitteln.

## Claims

1. A method for preparing a dietetic, cholesterol-reduced whole egg or egg yolk product, **characterized in** that whole egg or yolk substance is dehydrated, then is mixed with a cholesterol-reduced extractant based on liquid food oils, the extractant is allowed to act, and then the extractant is removed during a de-oiling step from the egg substance.

2. Method according to claim 1, **characterized in** that the treatment by extractant as well as the following de-oiling step is repeated several times and where called for also with different extractants.

3. Method according to the claims 1 and 2, **characterized in** that the extractant is removed only in part from the egg substance during the last de-oiling step.

4. Method according to the claims 1 through 3, **characterized in** that the extractant is a mixture of an arbitrary liquid food oil with a cholesterol-reduced egg oil fraction or is cholesterol-reduced egg oil alone.

5. Method according to the claims 1 through 3, **characterized in** that the extractant is a vegetal food oil or mixture of several vegetal food oils.

6. Method according to the claims 1 through 5, **characterized in** that the de-oiling step is implemented by decanting, separation, filter pressing and especially by centrifuging.

7. Method according to the claims 1 through 6, **characterized in** that the whole egg or the yolk are dehydrated by spray-drying.

8. Method according to claim 7, **characterized in** that during spray-drying or in a subsequent step the whole egg or the yolk is formed into a grain size of 150µm to 300µm by means of instantisation.

9. Method according to the claims 5 through 8, **characterized in** that following the last de-oiling step, the egg substance is additionally extracted with, supercritical fluids, preferably CO₂.

10. Method according to claim 9, **characterized in** that following the last de-oiling step and prior to extraction with supercritical fluids, the egg substance is formed by instant granulation into a grain size of 0,5 to 2 mm.

11. Method according to the claims 9 and 10, **characterized in** that an electrolyte, preferably cooking salt or calcium citrate, is added to the whole egg or yolk, prior to dehydration, in quantities between 0,1 and 2 % referred to the fresh-egg contents.

12. Method according to the claims 1 through 11, **characterized in** that during extraction or at least during the last de-oiling step, an inert gas is made to pass through the egg substance in pressurized or in unpressurized manner.

13. Method according to the claims 1 through 12, **characterized in** that the initial material is powdered egg yolk and in that the egg substance obtained following the treatment is mixed with a quantity of spray-dried egg white that corresponds to the natural whole egg composition.

14. Dietetic cholesterol-reduced egg or egg-yolk product which can be prepared by a method defined in claims 5 through 13.

15. Product according to claim 14, **characterized in** that its fat fraction is a mixture of vegetal food oils one of which being "red palm oil" in the natural state.

16. Product according to the claims 14 and 15, **characterized in** that its fat content essentially corresponds to that of the untreated egg or yolk.

17. Application of the whole egg or egg yolk product which can be prepared by the method of the claims 1 through 13 in the preparation of foodstuffs.

18. Application of the whole egg or egg yolk product which can be obtained as a byproduct in the methods according to the claims 1 through 13 as an emulsifier, colorant or flavoring agent in foodstuffs.

## Revendications

1. Procédé de fabrication à base d'oeuf complet ou de jaune d'oeuf d'un produit diététique à teneur en cholestérol réduite **caractérisé en ce que** l'on déshydrate l'oeuf complet ou le jaune d'oeuf que l'on mélange alors avec un agent d'extraction pauvre en cholestérol à base d'huiles comestibles liquides qu'on laisse agir, après quoi on le retire à nouveau de la masse d'oeuf au cours d'une étape de déshuilage.

2. Procédé selon la revendication 1, **caractérisé en ce que** le traitement par l'agent d'extraction ainsi que le déshuilage ultérieur peuvent être répétés à plusieurs reprises et ce, le cas échéant, également avec divers agents d'extraction.

3. Procédé selon les revendications 1 et 2, **caractérisé en ce qu'**au cours de la dernière étape de déshuilage, l'agent d'extraction n'est retiré que partiellement de la masse d'oeuf.

4. Procédé selon les revendications 1 à 3, **caractérisé en ce que** l'agent d'extraction mis en oeuvre est un mélange d'une huile comestible liquide quelconque et d'une fraction d'huile d'oeuf à teneur en cholestérol réduite, ou uniquement de l'huile d'oeuf à teneur en cholestérol réduite.

5. Procédé selon les revendications 1 à 3, **caractérisé en ce que** l'agent d'extraction mis en oeuvre est une huile comestible végétale ou un mélange de plusieurs huiles comestibles végétales.

6. Procédé selon les revendications 1 à 5, **caractérisé en ce que** l'opération de déshuilage est réalisée par décantation, séparation, filtre-presse, en particulier par centrifugation.

7. Procédé selon les revendications 1 à 6, **caractérisé en ce que** la déshydratation de l'oeuf complet ou du jaune d'oeuf est réalisée par séchage par pulvérisation.

8. Procédé selon la revendication 7, **caractérisé en ce que** lors du séchage par pulvérisation ou d'une étape suivante, le jaune d'oeuf ou l'oeuf complet est ramené par instantanéifcation à une dimension granulométrique de 150 µm à 300 µm.

9. Procédé selon les revendications 5 à 8, **caractérisé en ce qu'**après la dernière étape de déshuilage, la masse d'oeuf est soumise à une extraction supplémentaire à l'aide de fluides surcritiques, de préférence du CO₂.

10. Procédé selon la revendication 9, **caractérisé en ce qu'**après la dernière étape de déshuilage et avant l'extraction par les fluides surcritiques, la masse d'oeuf est ramenée par voie d'instantanéification à une dimension granulométrique de 0,5 à 2 mm.

11. Procédé selon les revendications 9 et 10, **caractérisé en ce qu'**avant la déshydratation, un électrolyte, de préférence du sel de cuisine ou du citrate de calcium, est ajouté à l'oeuf complet ou au jaune d'oeuf en quantités comprises entre 0,1 et 2 % relativement à la teneur en oeuf frais.

12. Procédé selon les revendications 1 à 11, **caractérisé en ce que** lors de l'extraction ou, tout au moins, lors de la dernière étape de déshuilage, un gaz inerte est conduit avec ou sans surpression à travers la masse d'oeuf.

13. Procédé selon les revendications 1 à 12, **caractérisé en ce que** la substance de départ mise en oeuvre est une poudre de jaune d'oeuf et que l'on mélange à la masse d'oeuf obtenue après traitement une quantité de blanc d'oeuf pulvérisé par séchage correspondant à celle de l'oeuf complet dans sa composition naturelle.

14. Produit diététique à teneur en cholestérol réduite à base d'oeuf complet ou de jaune d'oeuf pouvant être obtenu selon un procédé conforme aux revendications 5 à 13.

15. Produit selon la revendication 14, **caractérisé en ce que** la fraction grasse qui y est contenue est composée d'un mélange d'huiles comestibles végétales dont l'une est une "huile de palme rouge" à l'état naturel.

16. Produit selon les revendications 14 et 15, **caractérisé en ce que** sa teneur en matières grasses relativement à la quantité correspond essentiellement à celle de l'oeuf ou du jaune d'oeuf non traités.

17. Utilisation dans la fabrication de denrées alimentaires du produit à teneur en cholestérol réduite à base d'oeuf complet ou de jaune d'oeuf pouvant être obtenu par le procédé selon les revendications 1 à 13.

18. Utilisation de l'extrait d'oeuf complet ou de jaune d'oeuf obtenu comme sous-produit au cours du procédé selon les revendications 1 à 13 comme émulsifiant ou comme substance colorante ou aromatisante dans les denrées alimentaires.
